# EUROPEAN PATENT APPLICATION

(11) **EP 4 826 230 A1**
(43) Date of publication of application: **21.10.2026**
(21) Application number: 26173095.6
(22) Date of filing: 17.04.2026
(51) Int. Cl.: F02C 7/32, F01D 25/20

(54) **AIRCRAFT POWERPLANT GEARBOX WITH MULTIPLE LUBRICATION SYSTEMS**

(30) Priority: 17.04.2025 US 202519181814
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An aircraft powerplant (20) assembly includes a first engine rotating structure (70, 148), a second engine rotating structure (74, 160), a gearbox (102), a first lubrication system (190) and a second lubrication system (192). The gearbox (102) includes a gearbox housing (116), a first gear system (146) and a second gear system (158). The gearbox housing (116) includes a first compartment (137A) and a second compartment (137B) fluidly decoupled from the first compartment (137A). The first gear system (146) is in the first compartment (137A) and is coupled to the first engine rotating structure (70, 148). The second gear system (158) is in the second compartment (137B) and is coupled to the second engine rotating structure (74, 160). The first lubrication system (190) is configured to lubricate the first gear system (146) and is fluidly coupled to the first compartment (137A). The second lubrication system (192) is configured to lubricate the second gear system (158) and is fluidly coupled to the second compartment (137B). The second lubrication system (192) is fluidly decoupled from the first lubrication system (190).

## Description

### Technical Field

This disclosure relates generally to an aircraft powerplant and, more particularly, to an accessory system for the aircraft powerplant.

### Background Information

An aircraft powerplant such as a turbofan engine includes an accessory system. This accessory system may include various accessories such as fluid pumps, electric motors, electric generators, and the like coupled to an accessory gearbox. Various types and configurations of accessory systems are known in the art. Various types and configurations of lubrication systems for accessory systems are also known in the art. While these known accessory systems and lubrication systems have various benefits, there is still room in the art for improvement.

### SUMMARY OF THE DISCLOSURE

According to an aspect of the present invention, an assembly is provided for an aircraft powerplant. This assembly includes a first engine rotating structure, a second engine rotating structure, a gearbox, a first lubrication system and a second lubrication system. The first engine rotating structure includes a first bladed rotor. The second engine rotating structure includes a second bladed rotor. The second engine rotating structure is rotationally independent of the first engine rotating structure. The gearbox includes a gearbox housing, a first gear system and a second gear system. The gearbox housing includes a first compartment and a second compartment fluidly decoupled from the first compartment. The first gear system is disposed in the first compartment and is operationally coupled to the first engine rotating structure. The second gear system is disposed in the second compartment and is operationally coupled to the second engine rotating structure. The first lubrication system is configured to lubricate the first gear system and is fluidly coupled to the first compartment. The second lubrication system is configured to lubricate the second gear system and is fluidly coupled to the second compartment. The second lubrication system is fluidly decoupled from the first lubrication system.

According to another aspect of the present invention, another assembly is provided for an aircraft powerplant. This assembly includes a gearbox housing, a first gear system, a second gear system, a power transfer apparatus, a power coupler, a first lubrication system and a second lubrication system. The first gear system is disposed within the gearbox housing. The second gear system is disposed within the gearbox housing and is operationally independent of the first gear system. The power transfer apparatus is disposed within the gearbox housing between the first gear system and the second gear system. The power coupler is configurable in a first arrangement and a second arrangement. The power coupler operatively couples the first gear system to the power transfer apparatus and operatively decouples the second gear system from the power transfer apparatus in the first arrangement. The power coupler operatively couples the second gear system to the power transfer apparatus and operatively decouples the first gear system from the power transfer apparatus in the second arrangement. The first lubrication system is configured to lubricate the first gear system. The second lubrication system is configured to lubricate the second gear system and the power coupler. The second lubrication system is fluidly independent of the first lubrication system.

According to still another aspect of the present invention, another assembly is provided for an aircraft powerplant. This assembly includes a gearbox, a first engine accessory, a second engine accessory, a first lubrication system and a second lubrication system. The gearbox includes a gearbox housing, a first gear system and a second gear system. The gearbox housing includes a first compartment and a second compartment. The first gear system is disposed in the first compartment. The second gear system is disposed in the second compartment and is operationally independent of the first gear system. The first engine accessory is mounted to the gearbox and is operationally coupled to the first gear system. The second engine accessory is mounted to the gearbox and is operationally coupled to the second gear system. The first lubrication system is configured to lubricate the first gear system and the first engine accessory. The second lubrication system is configured to lubricate the second gear system and the second engine accessory. The second lubrication system is fluidly discrete from the first lubrication system.

In an embodiment of the above, the first engine accessory may be configured as or otherwise include a first electric machine. In addition or alternatively, the second engine accessory may be configured as or otherwise include a second electric machine.

In an embodiment according to any of the previous embodiments, the assembly may also include a first engine rotating structure and a second engine rotating structure. The first engine rotating structure may include a first compressor rotor and/or a first turbine rotor. The first engine rotating structure may be operationally coupled to the first engine accessory through the first gear system. The second engine rotating structure may be rotationally independent of the first rotating structure. The second engine rotating structure may include a second compressor rotor and/or a second turbine rotor. The second engine rotating structure may be operationally coupled to the second engine accessory through the second gear system.

In an embodiment according to any of the previous embodiments, the gearbox housing may include a first compartment, a second compartment and a fluid barrier between the first compartment and the second compartment. The first gear system may be disposed in the first compartment. The second gear system may be disposed in the second compartment.

In an embodiment according to any of the previous embodiments, the power coupler may be disposed in the second compartment.

In an embodiment according to any of the previous embodiments, the assembly may also include a turbine engine. The turbine engine may include the first engine rotating structure and the second engine rotating structure. The first lubrication system may also be configured to lubricate one or more internal components of the turbine engine.

In an embodiment according to any of the previous embodiments, the gearbox may be mounted to the turbine engine.

In an embodiment according to any of the previous embodiments, the second lubrication system may include an electric pump configured to pump lubricant to the second gear system.

In an embodiment according to any of the previous embodiments, the second lubrication system may include a mechanical pump configured to pump lubricant to the second gear system. The mechanical pump may be operationally coupled to the second engine rotating structure through the second gear system.

In an embodiment according to any of the previous embodiments, the assembly may also include an engine accessory operationally coupled to the second engine rotating structure through the second gear system. The second lubrication system may also be configured to lubricate the engine accessory.

In an embodiment according to any of the previous embodiments, the engine accessory may be configured as or otherwise include an electric machine. The electric machine may be configurable as an electric motor and/or an electric generator.

In an embodiment according to any of the previous embodiments, the assembly may also include a second engine accessory operationally coupled to the second engine rotating structure through the second gear system. The second lubrication system may also be configured to lubricate the second engine accessory.

In an embodiment according to any of the previous embodiments, the gearbox may also include a power transfer apparatus and a power coupler. The power coupler may be configurable in a first arrangement and a second arrangement. The power coupler may operatively couple the first gear system to the power transfer apparatus and operatively decouple the second gear system from the power transfer apparatus in the first arrangement. The power coupler may operatively couple the second gear system to the power transfer apparatus and operatively decouple the first gear system from the power transfer apparatus in the second arrangement.

In an embodiment according to any of the previous embodiments, the power coupler may be disposed within the second compartment.

In an embodiment according to any of the previous embodiments, the power coupler may be arranged with the power transfer apparatus and may be disposed between the first gear system and the second gear system within the gearbox housing.

In an embodiment according to any of the previous embodiments, the second lubrication system may also be configured to lubricate the power coupler.

In an embodiment according to any of the previous embodiments, the power coupler may include a clutch to facilitate a transition between the first arrangement and the second arrangement.

In an embodiment according to any of the previous embodiments, the assembly may also include an engine case housing the first engine rotating structure and the second engine rotating structure. The gearbox may be disposed outboard of the engine case.

In an embodiment according to any of the previous embodiments, the assembly may also include a compressor section, a combustor section, a turbine section and a flowpath. The combustor section may include a combustor. The flowpath may extend through the compressor section, the combustor section and the turbine section. The first bladed rotor may be disposed between the combustor and the second bladed rotor along the flowpath.

In an embodiment according to any of the previous embodiments, the compressor section may include the first bladed rotor and the second bladed rotor.

In an embodiment according to any of the previous embodiments, the turbine section may include the first bladed rotor and the second bladed rotor.

In an embodiment according to any of the previous embodiments, the assembly may also include an electric machine mounted to the gearbox. The electric machine may be operatively coupled to the first engine rotating structure through the first gear system.

In an embodiment according to any of the previous embodiments, the assembly may also include a plurality of engine accessories mounted to the gearbox. Each of the engine accessories may be operatively coupled to the first engine rotating structure through the first gear system.

In an embodiment according to any of the previous embodiments, the assembly may also include an electric machine mounted to the gearbox. The electric machine may be operatively coupled to the second engine rotating structure through the second gear system.

In an embodiment according to any of the previous embodiments, the assembly may also include an engine accessory mounted to the gearbox. The engine accessory may be operatively coupled to the second engine rotating structure through the second gear system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft propulsion system.
FIG. 2 is a schematic illustration of a portion of the aircraft propulsion system with an accessory system.
FIGS. 3A and 3B are partial schematic illustrations of the accessory system with its power coupler in various arrangements.
FIG. 4 is a partial schematic illustration of a first lubrication system for the accessory system.
FIGS. 5A and 5B are partial schematic illustrations of a second lubrication system for the accessory system with various arrangements.
FIG. 6 is a schematic illustration of a portion of the aircraft propulsion system with an electric machine electrically coupled to an electrical system.

### DETAILED DESCRIPTION

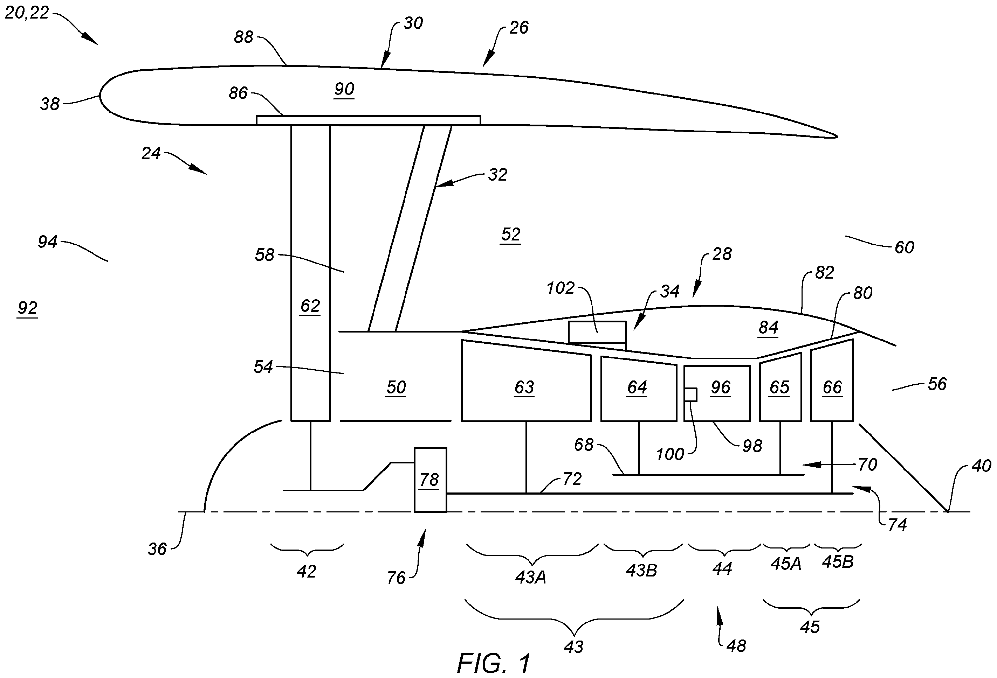

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

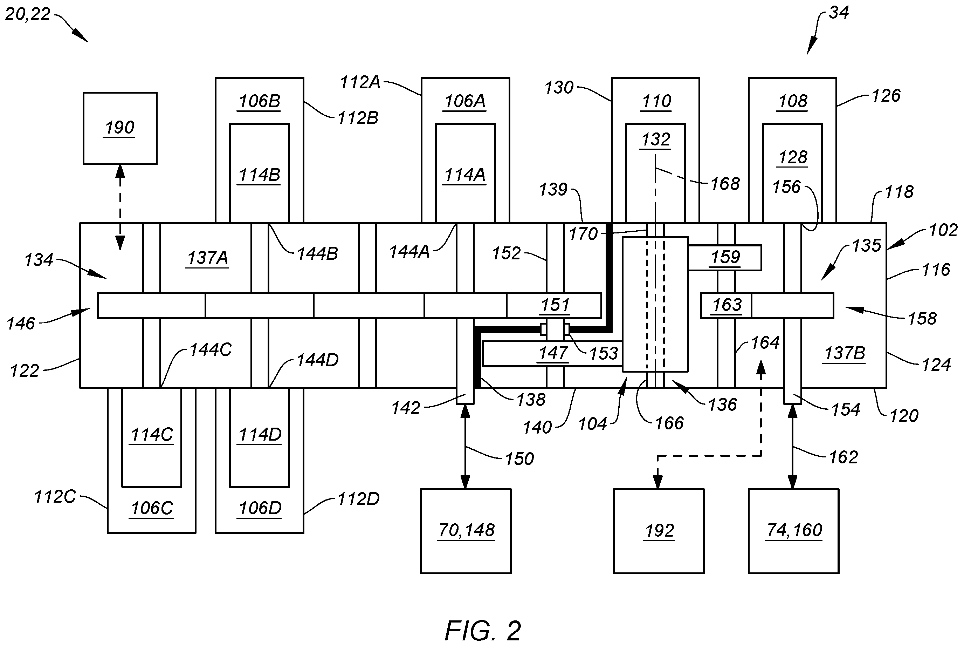

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an accessory system 34 (see also FIG. 2) servicing one or more components and/or sub-systems of the aircraft propulsion system 22 and its turbine engine 24. The aircraft propulsion system 22 extends axially along a powerplant axis 36 between an axial upstream, forward end 38 of the aircraft propulsion system 22 and an axial downstream, aft end 40 of the aircraft propulsion system 22. Briefly, the powerplant axis 36 may be a centerline axis of the aircraft propulsion system 22, the turbine engine 24 and/or one or more of its members. The powerplant axis 36 may also or alternatively be a rotational axis for one or more members of the turbine engine 24.

The aircraft propulsion system 22 and its turbine engine 24 of FIG. 1 include a propulsor section 42 (e.g., a fan section), a compressor section 43, a combustor section 44 and a turbine section 45. The compressor section 43 of FIG. 1 includes a low pressure compressor (LPC) section 43A and a high pressure compressor (HPC) section 43B. The turbine section 45 of FIG. 1 includes a high pressure turbine (HPT) section 45A and a low pressure turbine (LPT) section 45B. At least (or only) the LPC section 43A, the HPC section 43B, the combustor section 44, the HPT section 45A and the LPT section 45B collectively form a core 48 (e.g., a gas generator) of the turbine engine 24. The aircraft propulsion system 22 and its turbine engine 24 of FIG. 1 also include a core flowpath 50 (e.g., an annular core flowpath) and a bypass flowpath 52 (e.g., an annular bypass flowpath). The core flowpath 50 extends sequentially through the LPC section 43A, the HPC section 43B, the combustor section 44, the HPT section 45A and the LPT section 45B from an airflow inlet 54 into the core flowpath 50 to a combustion products exhaust 56 out from the core flowpath 50. The bypass flowpath 52 extends through a bypass duct from an airflow inlet 58 into the bypass flowpath 52 to an airflow exhaust 60 from the bypass flowpath 52, where the bypass duct may be formed by the inner housing structure 28 and the outer housing structure 30. The bypass flowpath 52 and its bypass duct are configured to bypass (e.g., are disposed radially outboard of and extend along) the engine core 48 and the inner housing structure 28.

The propulsor section 42, the LPC section 43A, the HPC section 43B, the combustor section 44, the HPT section 45A and the LPT section 45B may be arranged sequentially along the powerplant axis 36 within the housing structure 26. The propulsor section 42 includes a bladed propulsor rotor 62; e.g., a fan rotor. The LPC section 43A includes a bladed low pressure compressor (LPC) rotor 63. The HPC section 43B includes a bladed high pressure compressor (HPC) rotor 64. The HPT section 45A includes a bladed high pressure turbine (HPT) rotor 65. The LPT section 45B includes a bladed low pressure turbine (LPT) rotor 66. Each of these engine rotors 62-66 includes a rotor base (e.g., a disk or a hub) and a plurality of rotor blades (e.g., airfoils, vanes, etc.). The rotor blades may be arranged into one or more stages axially along the respective engine rotor 62-66. The rotor blades in each stage are arranged and may be equispaced circumferentially around the respective rotor base in an annular array. Each of the rotor blades is connected to the respective rotor base. The rotor blades, for example, may be formed integral with or otherwise attached to the respective rotor base. Each of the rotor blades projects spanwise (e.g., radially) out from the respective rotor base to a distal tip of the respective rotor blade.

The HPC rotor 64 is coupled to and rotatable with the HPT rotor 65. The HPC rotor 64 of FIG. 1, for example, is connected to the HPT rotor 65 through a high speed shaft 68. At least (or only) the HPC rotor 64, the HPT rotor 65 and the high speed shaft 68 collectively form a high speed rotating structure 70; e.g., a high speed spool of the turbine engine 24 and its engine core 48. This high speed rotating structure 70 of FIG. 1 and its members 64, 65 and 68 are rotatable about the powerplant axis 36. However, it is contemplated the high speed rotating structure 70 may alternatively be rotatable about another axis radially and/or angularly offset from the rotational axis of the propulsor rotor 62 and/or the centerline axis of the turbine engine 24.

The LPC rotor 63 is coupled to and rotatable with the LPT rotor 66. The LPC rotor 63 of FIG. 1, for example, is connected to the LPT rotor 66 through a low speed shaft 72. At least (or only) the LPC rotor 63, the LPT rotor 66 and the low speed shaft 72 collectively form a low speed rotating structure 74; e.g., a low speed spool of the turbine engine 24 and its engine core 48. This low speed rotating structure 74 of FIG. 1 and its members 63, 66 and 72 are rotatable about the powerplant axis 36. However, it is contemplated the low speed rotating structure 74 may alternatively be rotatable about another axis radially and/or angularly offset from the rotational axis of the propulsor rotor 62 and/or the centerline axis of the turbine engine 24.

The low speed rotating structure 74 is coupled to the propulsor rotor 62 through a rotating structure-to-propulsor (RSP) drivetrain 76. The RSP drivetrain 76 may be configured as a geared drivetrain, where a geartrain 78 (e.g., a transmission, a speed change device, an epicyclic geartrain, etc.) is disposed between and operatively couples the propulsor rotor 62 to the low speed rotating structure 74 and its LPT rotor 66. With this arrangement, the propulsor rotor 62 may rotate at a different (e.g., slower) rotational speed than the low speed rotating structure 74 and its LPT rotor 66. Here, the propulsor rotor 62 and the low speed rotating structure 74 may rotate in a common (the same) direction about the powerplant axis 36 or in opposite directions about the powerplant axis 36 depending, for example, upon the specific configuration of the geartrain 78. Alternatively, the RSP drivetrain 76 may be configured as a direct-drive drivetrain, where the geartrain 78 is omitted. With such an arrangement, the propulsor rotor 62 rotates at a common (the same) rotational speed as the low speed rotating structure 74 and its LPT rotor 66.

The inner housing structure 28 of FIG. 1 includes an inner case 80 (e.g., a core case) for the turbine engine 24, an inner nacelle structure 82 (sometimes referred to as an inner fixed structure (IFS)) and an internal inner housing compartment 84 (e.g., an engine core compartment). The inner case 80 is disposed radially outboard of, extends axially along and may circumscribe one or more or all of the engine sections 43A-45B and the engine rotors 63-66. The inner case 80 may thereby house and provide a support structure for the respective engine sections 43A-45B and the engine rotors 63-66. The inner nacelle structure 82 is configured to provide an aerodynamic cover over the engine core 48 and its inner case 80. The inner housing compartment 84 of FIG. 1 is formed by and is disposed radially between the inner case 80 and an inner barrel of the inner nacelle structure 82. The inner housing structure 28 and its inner nacelle structure 82 may also form a radial inner peripheral boundary of the bypass flowpath 52.

The outer housing structure 30 of FIG. 1 includes an outer case 86 (e.g., a fan case) for the turbine engine 24, an outer nacelle structure 88 and an internal outer housing compartment 90. The outer case 86 is disposed radially outboard of, extends axially along and may circumscribe the propulsor section 42 and its propulsor rotor 62. The outer case 86 may thereby house and may be configured as a containment structure for the propulsor section 42 and its propulsor rotor 62. The outer nacelle structure 88 is configured to provide an aerodynamic cover over the outer case 86. The outer housing compartment 90 of FIG. 1 is at least partially formed by and disposed radially between the outer case 86 and an outer portion (e.g., fan cowls) of the outer nacelle structure 88. The outer housing structure 30 and its outer nacelle structure 88 may also form a radial outer peripheral boundary of the bypass flowpath 52.

During operation of the aircraft propulsion system 22 of FIG. 1, ambient air from an environment 92 external to the aircraft and its aircraft propulsion system 22 enters the aircraft propulsion system 22 and its turbine engine 24 through an airflow inlet 94. This air is propelled by the rotating propulsor rotor 62 in a downstream, aft direction towards the propulsion system aft end 40.

An outer stream of the air propelled by the rotating propulsor rotor 62 is directed into the bypass flowpath 52 through its bypass inlet 58, which air entering the bypass flowpath 52 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 60 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 62 is directed into the core flowpath 50 through its core inlet 54, which air entering the core flowpath 50 may be referred to as "core air". This core air is compressed by the LPC rotor 63 and the HPC rotor 64 and is directed into a combustion chamber 96 (e.g., annular combustion chamber) of a combustor 98 (e.g., annular combustor) in the combustor section 44. Fuel is injected into the combustion chamber 96 by one or more fuel injectors 100 and mixed with the compressed core air to provide a fuel-air mixture. This fuel-air mixture is ignited and combustion products thereof flow through and sequentially drive rotation of the HPT rotor 65 and the LPT rotor 66. The rotation of the HPT rotor 65 and the LPT rotor 66 respectively drive rotation of the HPC rotor 64 and the LPC rotor 63 and, thus, compression of the air received from the core inlet 54. The rotation of the LPT rotor 66 also drives rotation of the propulsor rotor 62 through the RSP drivetrain 76. The combustion products may then be exhausted from the turbine engine 24 and its engine core 48 through the core exhaust 56.

While the turbine engine 24 is described above with a particular two rotating structure arrangement (e.g., a two-spool architecture), the present disclosure is not limited thereto. For example, the LPC rotor 63 may be omitted to configure the LPT rotor 66 as a power turbine (PT) rotor for the propulsor rotor 62. The turbine engine 24 may also or alternatively include another rotating structure with a bladed compressor rotor in the compressor section 43 and a bladed turbine rotor in the turbine section 45; e.g., an intermediate speed spool for the engine core 48.

Referring to FIG. 2, the accessory system 34 includes a set of one or more gearbox mounted engine accessories, an accessory gearbox 102 with a power coupler 104 which may be integrated with the accessory gearbox 102. The gearbox mounted engine accessories of FIG. 2 includes one or more first engine accessories 106A-D (generally referred to as "106"), a second engine accessory 108 and a third engine accessory 110. The present disclosure, however, is not limited to such an exemplary gearbox mounted engine accessory arrangement. For example, the accessory system 34 may be configured with multiple of the second engine accessories 108 and/or multiple of the third engine accessories 110. Moreover, it is contemplated the accessory system 34 may alternatively be configured without one, more or all of the first engine accessories 106 and/or without the second engine accessory 108.

Each of the first engine accessories 106A-D includes a first engine accessory housing 112A-D (generally referred to as "112") (e.g., a case) and a first engine accessory rotor 114A-D (generally referred to as "114") at least partially housed within the respective first engine accessory housing 112A-D. Each first engine accessory 106 is mounted to or otherwise arranged with the accessory gearbox 102. The first engine accessory housing 112 of each first engine accessory 106, for example, may be mechanically fastened and/or otherwise attached to a housing 116 (e.g., a case) of the accessory gearbox 102. Briefly, the gearbox housing 116 of FIG. 2 extends axially along the powerplant axis 36 (see FIG. 1) between opposing axial sides 118 and 120 of the accessory gearbox 102 and its gearbox housing 116. The gearbox housing 116 of FIG. 2 also extends laterally (e.g., circumferentially and/or tangentially) between opposing lateral ends 122 and 124 of the accessory gearbox 102 and its gearbox housing 116. The first engine accessories 106A and 106B may be disposed at (e.g., on, adjacent or proximate) the gearbox first side 118. The first engine accessories 106A and 106B of FIG. 2, for example, are arranged laterally along the gearbox first side 118 between the gearbox first end 122 and an intermediate location of the power coupler 104 and/or the third engine accessory 110. The first engine accessories 106C and 106D may be disposed at the gearbox second side 120. The first engine accessories 106C and 106D of FIG. 2, for example, are arranged laterally along the gearbox second side 120 between the gearbox first end 122 and the intermediate location of the power coupler 104 and/or the third engine accessory 110. The present disclosure, however, is not limited to such an exemplary arrangement. All of the first engine accessories 106, for example, may be disposed to the gearbox first side 118 or the gearbox second side 120.

The second engine accessory 108 includes a second engine accessory housing 126 (e.g., a case) and a second engine accessory rotor 128 at least partially housed within the second engine accessory housing 126. The second engine accessory 108 is mounted to or otherwise arranged with the accessory gearbox 102. The second engine accessory housing 126, for example, may be mechanically fastened and/or otherwise attached to the gearbox housing 116. The second engine accessory 108 may be disposed at the gearbox first side 118. The second engine accessory 108 of FIG. 2, for example, is arranged laterally along the gearbox first side 118 between the gearbox second end 124 and the intermediate location of the power coupler 104 and/or the third engine accessory 110. The present disclosure, however, is not limited to such an exemplary arrangement. For example, the second engine accessory 108 may alternatively be arranged laterally along the gearbox second side 120 between the gearbox second end 124 and the intermediate location of the power coupler 104 and/or the third engine accessory 110.

The third engine accessory 110 includes a third engine accessory housing 130 (e.g., a case) and a third engine accessory rotor 132 at least partially housed within the third engine accessory housing 130. The third engine accessory 110 is mounted to or otherwise arranged with the accessory gearbox 102. The third engine accessory housing 130, for example, may be mechanically fastened and/or otherwise attached to the gearbox housing 116. The third engine accessory 110 may be disposed at the gearbox first side 118. The third engine accessory 110 of FIG. 2, for example, is arranged laterally along the gearbox first side 118 between (a) the first engine accessories 106A and 106B and (b) the second engine accessory 108. Here, the third engine accessory 110 is laterally aligned with the power coupler 104.

Examples of the engine accessories 106, 108 and 110 include, but are not limited to, fluid pump(s), fluid conditioner(s) and/or electric machine(s). Examples of the fluid pumps include, but are not limited to, fuel pump(s), hydraulic pump(s) and/or lubricant pump(s). Examples of the fluid conditioners include, but are not limited to, de-oiler(s) and/or fluid-gas separator(s). Examples of the electric machines include, but are not limited to, variable frequency generator(s), integral drive generator(s), permanent magnet motor-generator(s) and/or permanent magnet motor(s).

The accessory gearbox 102 includes the gearbox housing 116, a first engine power transfer apparatus 134, a second engine power transfer apparatus 135 and an accessory power transfer apparatus 136. The gearbox housing 116 is configured with a multi-compartment interior. The gearbox housing 116 of FIG. 2, for example, includes an internal gearbox first compartment 137A, an internal gearbox second compartment 137B and an internal fluid barrier 138; e.g., an inter-compartment divider wall. The fluid barrier 138 is arranged laterally and/or axially between the first compartment 137A and the second compartment 137B within the gearbox housing 116. The fluid barrier 138 extends across the interior of the gearbox housing 116 between and is connected to (e.g., formed integral with or otherwise attached to) (a) an external first sidewall 139 of the gearbox bousing 116 at the gearbox first side 118 and (b) an external second sidewall 140 of the gearbox housing 116 at the gearbox second side 120. The fluid barrier 138 of FIG. 2 thereby fluidly divides the interior of the gearbox housing 116 into the fluidly independent (e.g., fluidly discrete, fluidly decoupled, etc.) first and second compartments 137A and 137B (generally referred to as "137"). The first compartment 137A of FIG. 2 is disposed laterally between the fluid barrier 138 and the gearbox first end 122. The second compartment 137B of FIG. 2 is disposed laterally between the fluid barrier 138 and the gearbox second end 124.

Each of the power transfer apparatuses 134, 135, 136 is partially or completely housed within the gearbox housing 116. The power transfer apparatuses 134, 135 and 136 of FIG. 2, for example, are partially or completely located within the multi-compartment interior of the gearbox bousing 116. More particularly, the first engine power transfer apparatus 134 of FIG. 2 is disposed with the first compartment 137A. The second engine power transfer apparatus 135 and the third engine power transfer apparatus 136 are disposed with the second compartment 137B.

The first engine power transfer apparatus 134 is operatively independent of the second engine power transfer apparatus 135 inside and outside of the accessory gearbox 102 and its gearbox housing 116. The first engine power transfer apparatus 134 of FIG. 2, for example, is spatially separated from and mechanically decoupled from the second engine power transfer apparatus 135 within the accessory gearbox 102 and its gearbox housing 116. By contrast, the first engine power transfer apparatus 134 of FIG. 2 may be selectively operatively coupled to the accessory power transfer apparatus 136 within the accessory gearbox 102 and its gearbox housing 116 through the power coupler 104 as described below.

The first engine power transfer apparatus 134 of FIG. 2 includes a first engine coupling 142, one or more first engine accessory couplings 144A-D (generally referred to as "144"), a first gear system 146 and a first gear system-to-power coupler (GSPC) gear 147. The first engine coupling 142 is operatively coupled to a first engine rotating structure 148 through, for example, a first drivetrain 150. This first drivetrain 150 may be configured as or otherwise include a shaft, a tower shaft assembly, another gearbox (e.g., an angle gearbox), and/or the like. For ease of description, the first engine rotating structure 148 may be described below as the high speed rotating structure 70. However, in other embodiments, it is contemplated the first engine rotating structure 148 may alternatively be the low speed rotating structure 74 or another rotating structure within the turbine engine 24 and its engine core 48 (see FIG. 1). Each first engine accessory coupling 144 of FIG. 2 is operatively coupled to the first engine accessory rotor 114 of a respective one of the first engine accessories 106. The first gear system 146 is (e.g., completely) housed within the accessory gearbox 102 and its gearbox housing 116. The first gear system 146 of FIG. 2, for example, is located within the first compartment 137A. This first gear system 146 is operatively coupled between and operatively interconnects the various couplings 142 and 144. The first gear system 146 is also operatively coupled to the first GSPC gear 147. For example, a first system gear 151 of the first gear system 146 and the first GSPC gear 147 may each be rotatable with and mounted to a first power transfer apparatus (PTA) shaft 152. This first PTA shaft 152 may extend across the fluid barrier 138 such that the first system gear 151 is disposed to a first side of the fluid barrier 138 in the first compartment 137A, and the first GSPC gear 147 is disposed to a second side of the fluid barrier 138 in the second compartment 137B. To reduce or prevent fluid (e.g., air and/or lubricant) leakage across the fluid barrier 138 along the first PTA shaft 152, a seal element 153 may be engaged with (e.g., contact) and disposed between the first PTA shaft 152 and the fluid barrier 138. Of course, it is contemplated one or more other sealing and/or leakage reduction techniques may also or alternatively be employed along the fluid barrier 138 such as, but not limited to, using buffer air sourced from the compressor section 43 (see FIG. 1).

The second engine power transfer apparatus 135 is operatively independent of the first engine power transfer apparatus 134 inside and outside of the accessory gearbox 102 and its gearbox housing 116. The second engine power transfer apparatus 135 of FIG. 2, for example, is spatially separated from and mechanically decoupled from the first engine power transfer apparatus 134 within the accessory gearbox 102 and its gearbox housing 116. By contrast, the second engine power transfer apparatus 135 of FIG. 2 may be selectively operatively coupled to the accessory power transfer apparatus 136 within the accessory gearbox 102 and its gearbox housing 116 through the power coupler 104 as described below.

The second engine power transfer apparatus 135 of FIG. 2 includes a second engine coupling 154, a second engine accessory coupling 156, a second gear system 158 and a second gear system-to-power coupler (GSPC) gear 159. The second engine coupling 154 is operatively coupled to a second engine rotating structure 160 through, for example, a second drivetrain 162. This second drivetrain 162 may be configured as or otherwise include a shaft, a tower shaft assembly, another gearbox (e.g., an angle gearbox), and/or the like. For ease of description, the second engine rotating structure 160 may be described below as the low speed rotating structure 74. However, in other embodiments, it is contemplated the second engine rotating structure 160 may alternatively be the high speed rotating structure 70 or another rotating structure within the turbine engine 24 and its engine core 48 (see FIG. 1). The second engine accessory coupling 156 of FIG. 2 is operatively coupled to the second engine accessory rotor 128. The second gear system 158 is (e.g., completely) housed within the accessory gearbox 102 and its gearbox housing 116. The second gear system 158 of FIG. 2, for example, is located within the second compartment 137B. This second gear system 158 is operatively coupled between and operatively interconnects the various couplings 154 and 156. The second gear system 158 is also operatively coupled to the second GSPC gear 159. For example, a second system gear 163 of the second gear system 158 and the second GSPC gear 159 may each be rotatable with and mounted to a second power transfer apparatus (PTA) shaft 164. Here, the second GSPC gear 159 and the second PTA shaft 164 are located within the second compartment 137B.

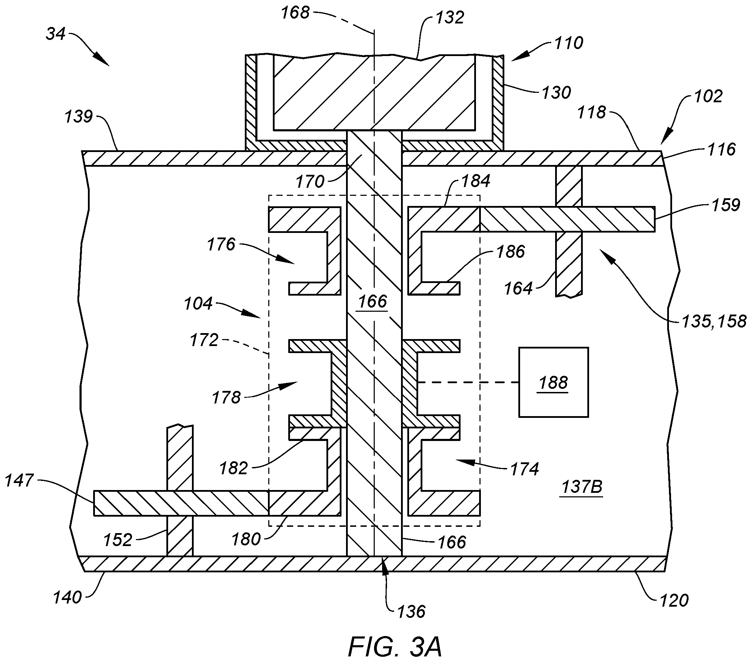

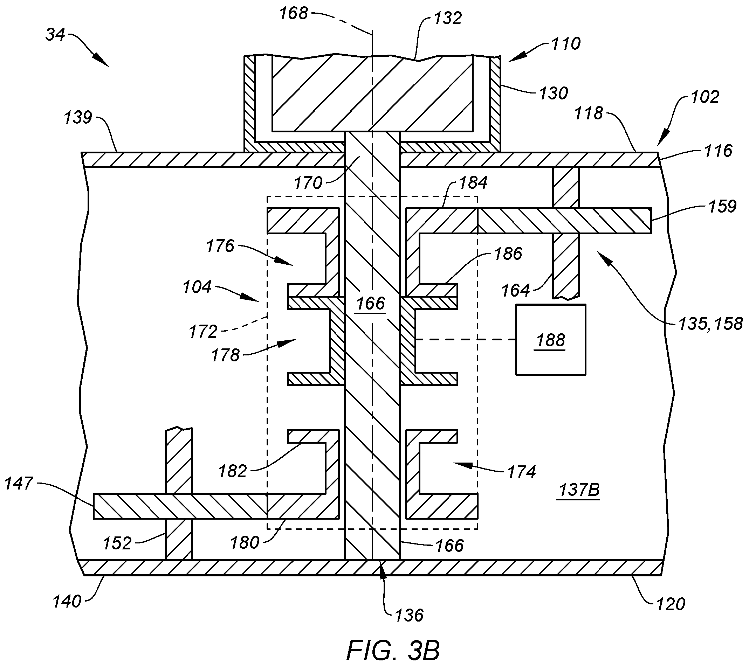

Referring to FIGS. 3A and 3B, the accessory power transfer apparatus 136 may be configured as or otherwise include a power transfer shaft 166. This power transfer shaft 166 is rotatable about an axis 168 of the power transfer shaft 166. The power transfer shaft 166 extends axially along its shaft axis 168 from a first end of the power transfer shaft 166 to an opposite second end of the power transfer shaft 166. The power transfer shaft 166 is operatively coupled to the third engine accessory rotor 132 through an accessory power transfer coupling 170. This accessory power transfer coupling 170 may be a mechanical connection (e.g., a bolted connection, a splined connection) between the power transfer shaft 166 and the third engine accessory rotor 132. The present disclosure, however, is not limited to such exemplary accessory power transfer coupling arrangements. The power transfer shaft 166 may be partially or completely housed within the accessory gearbox 102 and its gearbox housing 116. The power transfer shaft 166 of FIGS. 3A and 3B, for example, is located in the second compartment 137B.

The power coupler 104 is partially or completely housed within the gearbox housing 116. The power coupler 104 of FIGS. 3A and 3B, for example, is partially or completely located within the second compartment 137B of the gearbox housing 116. The power coupler 104 of FIGS. 3A and 3B includes a coupler housing 172 (e.g., a case), a first coupler assembly 174, a second coupler assembly 176 and an actuatable clutch member 178.

The first coupler assembly 174 is disposed within an interior of the coupler housing 172. This first coupler assembly 174 of FIGS. 3A and 3B includes a first coupler gear 180 and a first gear clutch member 182. Each of these first coupler assembly members 180, 182 is coaxial with and may axially overlap and circumscribe the power transfer shaft 166. However, each of the first coupler assembly members 180, 182 is rotationally independent of the power transfer shaft 166 when the actuatable clutch member 178 is disengaged from the first gear clutch member 182 (see FIG. 3B). The first coupler gear 180 may have an axially fixed position along the power transfer shaft 166 and its shaft axis 168. This first coupler gear 180 is engaged (e.g., meshed) and rotatable with the first GSPC gear 147. Here, an interface between the first coupler gear 180 and the first GSPC gear 147 may be disposed in (or near) a corresponding port (e.g., an opening) in a sidewall of the coupler housing 172. The first gear clutch member 182 is disposed axially along the power transfer shaft 166 and its shaft axis 168 between the first coupler gear 180 and the actuatable clutch member 178. The first gear clutch member 182 may have an axially fixed position along the power transfer shaft 166 and its shaft axis 168. This first gear clutch member 182 is connected to (e.g., for integral with or otherwise attached to) the first coupler gear 180. The first gear clutch member 182 is thereby rotatable with the first coupler gear 180 about the shaft axis 168.

The second coupler assembly 176 is disposed within the interior of the coupler housing 172. This second coupler assembly 176 of FIGS. 3A and 3B includes a second coupler gear 184 and a second gear clutch member 186. Each of these second coupler assembly members 184, 186 is coaxial with and may axially overlap and circumscribe the power transfer shaft 166. However, each of the second coupler assembly members 184, 186 is rotationally independent of the power transfer shaft 166 when the actuatable clutch member 178 is disengaged from the second gear clutch member 186 (see FIG. 3A). The second coupler gear 184 may have an axially fixed position along the power transfer shaft 166 and its shaft axis 168. This second coupler gear 184 is engaged (e.g., meshed) and rotatable with the second GSPC gear 147. Here, an interface between the second coupler gear 184 and the second GSPC gear 147 may be disposed in (or near) a corresponding port (e.g., an opening) in the sidewall of the coupler housing 172. The second gear clutch member 186 is disposed axially along the power transfer shaft 166 and its shaft axis 168 between the second coupler gear 184 and the actuatable clutch member 178. The second gear clutch member 186 may have an axially fixed position along the power transfer shaft 166 and its shaft axis 168. This second gear clutch member 186 is connected to (e.g., for integral with or otherwise attached to) the second coupler gear 184. The second gear clutch member 186 is thereby rotatable with the second coupler gear 184 about the shaft axis 168.

The actuatable clutch member 178 is disposed within the interior of the coupler housing 172. This actuatable clutch member 178 of FIGS. 3A and 3B is located axially along the power transfer shaft 166 and its shaft axis 168 between (a) the first coupler assembly 174 and its first gear clutch member 182 and (b) the second coupler assembly 176 and its second gear clutch member 186. The actuatable clutch member 178 is coaxial with, axially overlaps and circumscribes the power transfer shaft 166. The actuatable clutch member 178 is also operatively coupled to the power transfer shaft 166. The actuatable clutch member 178, for example, may be rotationally coupled to the power transfer shaft 166 through a splined and/or otherwise keyed interface between the actuatable clutch member 178 and the power transfer shaft 166. However, the actuatable clutch member 178 of FIGS. 3A and 3B is movably (e.g., translatable) axially along the power transfer shaft 166 between a first position (e.g., see FIG. 3A) and a second position (e.g., see FIG. 3B). A power coupler actuator 188 may thereby move the actuatable clutch member 178 axially between the first position of FIG. 3A and the second position of FIG. 3B. Examples of the coupler actuator 188 include, but are not limited to, a hydraulic actuator (e.g., a hydraulic cylinder), a pneumatic actuator, a fueldraulic actuator or an electric motor.

In the first position of FIG. 3A, the power coupler 104 is configured in a first power transfer arrangement. More particularly, the actuatable clutch member 178 operatively couples the first coupler assembly 174 to the power transfer shaft 166. The actuatable clutch member 178 of FIG. 3A, for example, axially engages (e.g., contacts and is pressed against by the coupler actuator 188) the first gear clutch member 182. The actuatable clutch member 178 may thereby rotationally link the power transfer shaft 166 to the first gear clutch member 182 and, thus, the first coupler gear 180. With this first power transfer arrangement, the power coupler 104 operatively couples the first gear system 146 (FIG. 2) to the power transfer shaft 166 and, thus, the third engine accessory rotor 132. By contrast, the actuatable clutch member 178 operatively decouples the second coupler assembly 176 from the power transfer shaft 166. The actuatable clutch member 178 of FIG. 3A, for example, is disengaged from and axially spaced from the second gear clutch member 186. The second gear clutch member 186 may thereby rotate with the second gear system 158 independent of the power transfer shaft 166.

With the first power transfer arrangement, the third engine accessory rotor 132 is operatively coupled to the first engine power transfer apparatus 134. The first engine power transfer apparatus elements 142 and 144 (see FIG. 2) may thereby rotate with the third engine accessory rotor 132. The third engine accessory rotor 132 may be rotationally driven by the first engine rotating structure 148 or the rotor of one of the first engine accessories 106 (see FIG. 2). Alternatively, the third engine accessory rotor 132 may drive rotation of (or mechanically boost power to) the first engine rotating structure 148 and/or the rotors 114 of the first engine accessories 106 (see FIG. 2).

In the second position of FIG. 3B, the power coupler 104 is configured in a second power transfer arrangement. More particularly, the actuatable clutch member 178 operatively couples the second coupler assembly 176 to the power transfer shaft 166. The actuatable clutch member 178 of FIG. 3B, for example, axially engages (e.g., contacts and is pressed against by the coupler actuator 188) the second gear clutch member 186. The actuatable clutch member 178 may thereby rotationally link the power transfer shaft 166 to the second gear clutch member 186 and, thus, the second coupler gear 184. With this second power transfer arrangement, the power coupler 104 operatively couples the second gear system 158 to the power transfer shaft 166 and, thus, the third engine accessory rotor 132. By contrast, the actuatable clutch member 178 operatively decouples the first coupler assembly 174 from the power transfer shaft 166. The actuatable clutch member 178 of FIG. 3B, for example, is disengaged from and axially spaced from the first gear clutch member 182. The first gear clutch member 182 may thereby rotate with the first gear system 146 independent of the power transfer shaft 166.

With the second power transfer arrangement, the third engine accessory rotor 132 is operatively coupled to the second engine power transfer apparatus 135. The second engine power transfer apparatus elements 154 and 156 (see FIG. 2) may thereby rotate with the third engine accessory rotor 132. The third engine accessory rotor 132 may be rotationally driven by the second engine rotating structure 160 or the second engine accessory rotor 128 (see FIG. 2). Alternatively, the third engine accessory rotor 132 may drive rotation of (or mechanically boost power to) the second engine rotating structure 160 and/or the second engine accessory rotor 128 (see FIG. 2).

While the power coupler 104 is described above with respect to the exemplary first and second power transfer arrangements, it is contemplated the actuatable clutch member 178 may also be moved (e.g., translated) by the coupler actuator 188 to an intermediate third position between the first position of FIG. 3A and the second position of FIG. 3B. At such a third position, the power coupler 104 may be configured in a neutral arrangement where the power coupler 104 operatively decouples the power transfer shaft 166 from both the first coupler assembly 174 and the second coupler assembly 176. In such a neutral position, the third engine accessory 110 may be depowered or operated independent of the first engine rotating structure 148 and the second engine rotating structure 160 (see FIG. 2). More particularly, the third engine accessory 110 and its third engine accessory rotor 132 may be functionally isolated from the engine core 48 and its rotating structures 148 and 160 (see FIGS. 1 and 2).

Referring to FIGS. 2, 3A and 3B, the position of the actuatable clutch member 178 may be selected based on a rotational speed of the engine rotating structures 148 and/or 160. For example, when the second engine rotating structure 160 (e.g., the low speed rotating structure 74) is rotating at or below a threshold speed, the power coupler 104 may operate in the second power transfer arrangement. However, when the second engine rotating structure 160 is rotating above the threshold speed, the power coupler 104 may operate in the first power transfer arrangement. With such operation, the power coupler 104 may operate in the first power transfer arrangement during higher power phases of aircraft flight such as aircraft takeoff, aircraft climb and aircraft cruise. By contrast, the power coupler 104 may operate in the second power transfer arrangement during lower power phases of aircraft flight such as aircraft descent, aircraft landing, aircraft taxiing and during startup of the aircraft powerplant 20 while on ground. The present disclosure, of course, is not limited to the foregoing exemplary power coupler schedule.

Referring to FIG. 2, the accessory gearbox 102 may be arranged with multiple lubrication systems 190 and 192. These lubrication systems 190 and 192 of FIG. 2 are fluidly independent (e.g., fluidly discrete, fluidly decoupled, etc.) from one another. With such an arrangement, should contaminants enter lubricant flowing in one of the lubrication systems 190, 192, those contaminants will not enter and thereby operationally affect lubricant flowing in the other one of the lubrication systems 192, 190. This fluid independence may be particularly useful where one of the lubrication systems (e.g., the first lubrication system 190) services one or more components of the turbine engine 24 while the other one of the lubrication systems (e.g., the second lubrication system 192) services the power coupler 104 and its clutch.

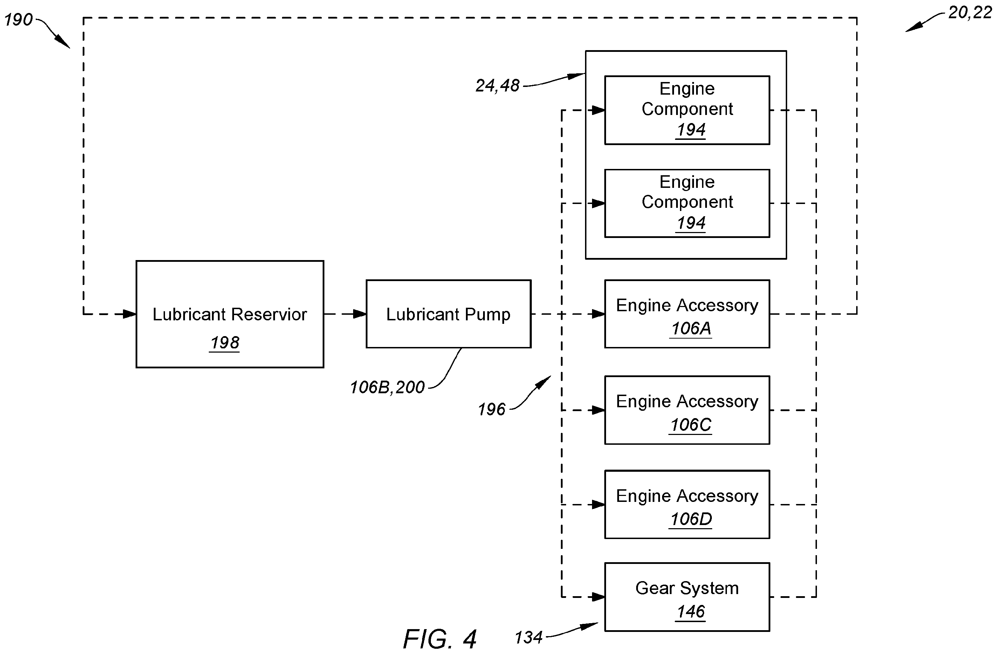

Referring to FIG. 4, the first lubrication system 190 is configured to lubricate, cool and/or otherwise service the first engine power transfer apparatus 134 and its first gear system 146 with a first lubricant; e.g., oil. This first lubrication system 190 may also lubricate, cool and/or otherwise service one or more of the first engine accessories 106 and/or one or more internal components 194 of the turbine engine 24 and its engine core 48 with the first lubricant. Examples of the engine components 194 may include, but are not limited to, one or more bearings supporting the rotating structures 70 and/or 74 (see FIG. 1), one or more bearings and/or one or more gears within the RSP drivetrain 76 and its geartrain 78 (see FIG. 1), one or more seal assemblies, and/or the like. The first lubrication system 190 of FIG. 4 includes a (e.g., closed loop) first lubricant circuit 196, a first lubricant reservoir 198 and a first lubricant pump 200. The first lubricant circuit 196 extends from an outlet of the first lubricant reservoir 198, through the first lubricant pump 200 and volumes in and/or around the serviced components 106, 146 and 194, to an inlet of the first lubricant reservoir 198. The first lubricant pump 200 is configured to direct (e.g., pump) the first lubricant received from the first lubricant reservoir 198 to the serviced components 106, 146 and 194, where the first lubricant may lubricate, cool and/or otherwise service those serviced components 106, 146 and 194. **In** the arrangement of FIG. 4, the first engine accessory 106B is configured as the first lubricant pump 200; here a mechanical pump for the first lubrication system 190. The present disclosure, however, is not limited to such an exemplary arrangement. For example, the first lubricant pump 200 may alternatively be another mechanical pump located remote from the accessory gearbox 102 or an electric pump. Moreover, it should be understood that the first lubrication system 190 is shown in FIG. 4 in simplified form. For example, the first lubrication system 190 may also include one or more additional system components not shown in FIG. 4. Examples of these additional system components may include, but are not limited to, filter(s), heat exchanger(s), flow regulator(s), additional pump(s), valve(s), sensor device(s), and/or the like. In another example, while the serviced components 106, 146 and 194 are generally shown in FIG. 4 in parallel with one another along the first lubricant circuit 196, it is contemplated some or all of these serviced components 106, 146 and 194 may alternatively be arranged in series along the first lubricant circuit 196.

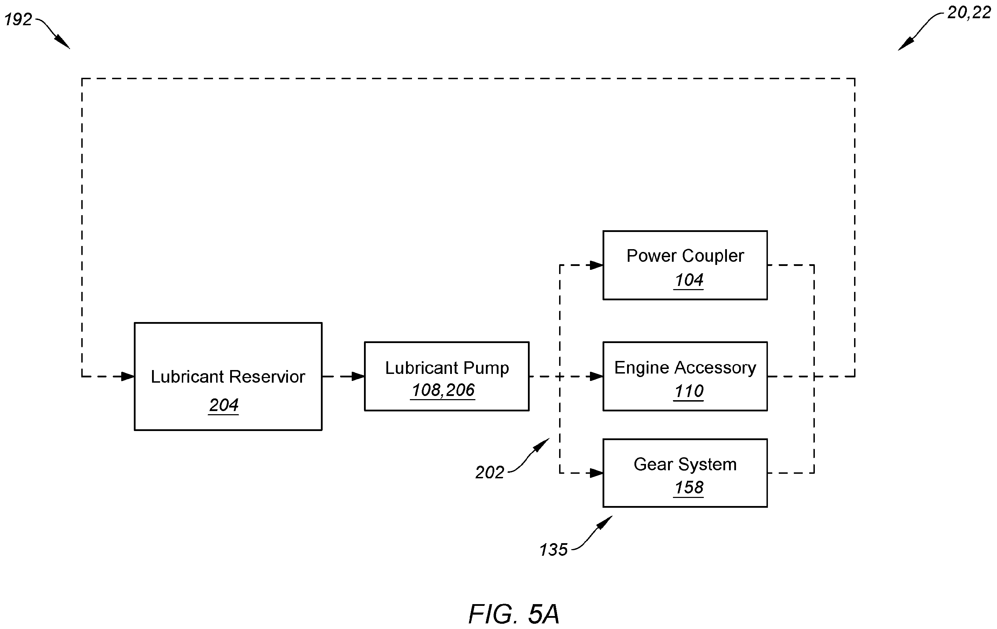

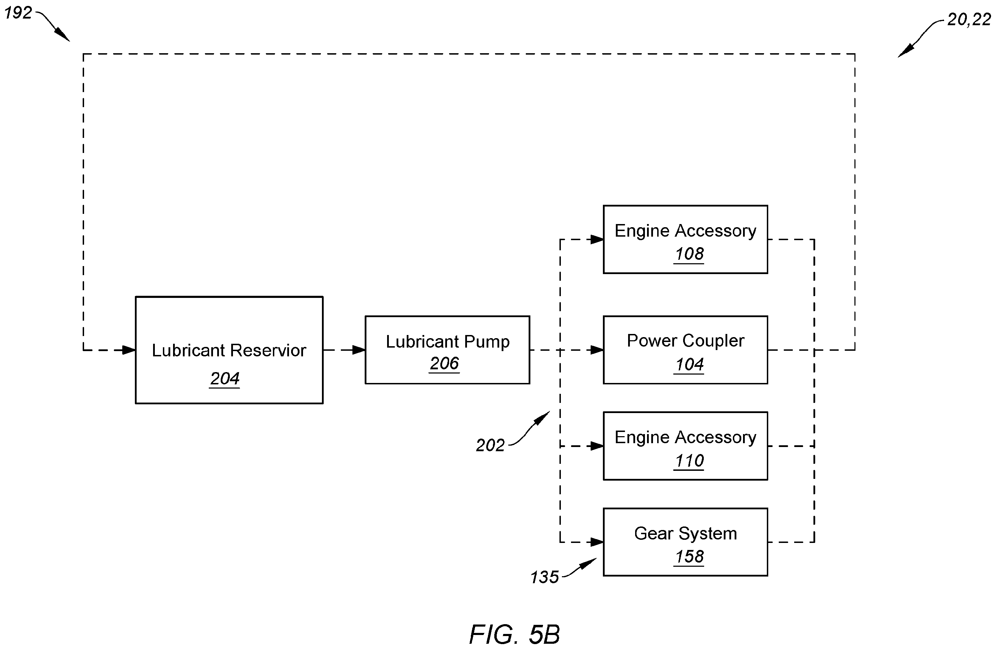

Referring to FIGS. 5A and 5B, the second lubrication system 192 is configured to lubricate, cool and/or otherwise service the second engine power transfer apparatus 135 and its second gear system 158 with a second lubricant; e.g., oil. This second lubrication system 192 may also lubricate, cool and/or otherwise service one or more of the engine accessories 108 and/or 110 and/or the power coupler 104 with the second lubricant. The second lubrication system 192 of FIGS. 5A and 5B includes a (e.g., closed loop) second lubricant circuit 202, a second lubricant reservoir 204 and a second lubricant pump 206. The second lubricant circuit 202 extends from an outlet of the second lubricant reservoir 204, through the second lubricant pump 206 and volumes in and/or around the serviced components 104, 108, 110 and 158, to an inlet of the second lubricant reservoir 204. The second lubricant pump 206 is configured to direct (e.g., pump) the second lubricant received from the second lubricant reservoir 204 to the serviced components 104, 108, 110 and 158, where the second lubricant may lubricate, cool and/or otherwise service those serviced components 104, 108, 110 and 158. In the arrangement of FIG. 5A, the second engine accessory 108 is configured as the second lubricant pump 206; here a mechanical pump for the second lubrication system 192. In the arrangement of FIG. 5B, the second lubricant pump 206 is configured as an electric pump discrete from the second engine accessory 108. The present disclosure, however, is not limited to such an exemplary arrangement. For example, the second lubricant pump 206 may alternatively be another mechanical pump located remote from the accessory gearbox 102. Moreover, it should be understood that the second lubrication system 192 is shown in FIGS. 5A and 5B in simplified form. For example, the second lubrication system 192 may also include one or more additional system components not shown in FIGS. 5A and 5B. Examples of these additional system components may include, but are not limited to, filter(s), heat exchanger(s), flow regulator(s), additional pump(s), valve(s), sensor device(s), and/or the like. In another example, while the serviced components 104, 108, 110 and 158 are generally shown in FIGS. 5A and 5B in parallel with one another along the second lubricant circuit 202, it is contemplated some or all of these serviced components 104, 108, 110 and 158 may alternatively be arranged in series along the second lubricant circuit 202.

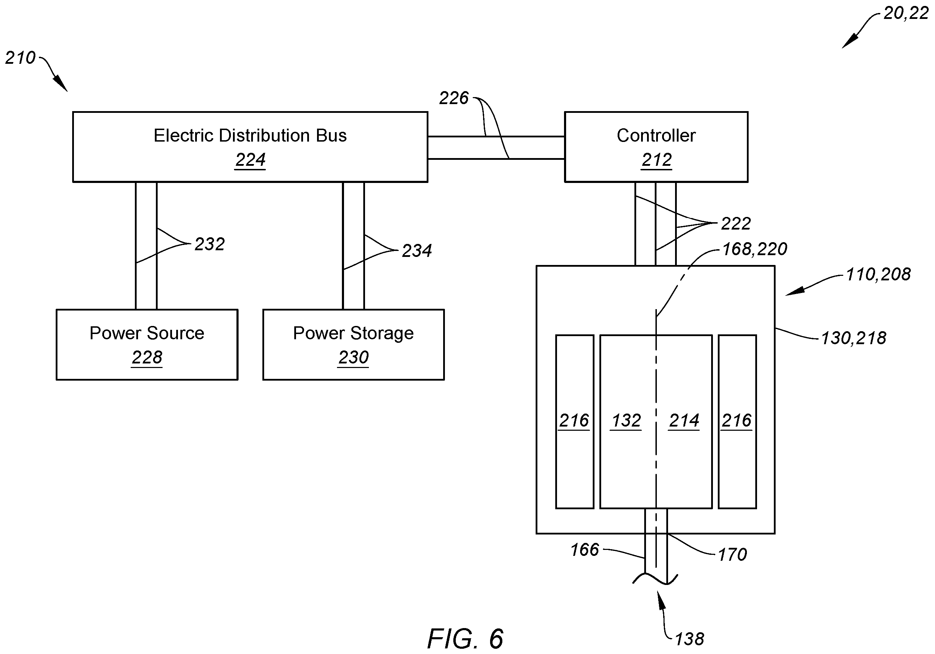

In some embodiments, referring to FIG. 6, the third engine accessory 110 may be configured as an electric machine 208 that is electrically coupled to an electrical system 210 through an electric machine (EM) controller 212. The electric machine 208 of FIG. 6 includes an electric machine rotor 214 (here, the third engine accessory rotor 132), an electric machine stator 216 and an electric machine housing 218 (here, the third engine accessory housing 130). The machine rotor 214 is rotatable about a rotational axis 220 of the machine rotor 214, which rotational axis 220 may also be an axial centerline of the electric machine 208 and coaxial with the shaft axis 168. The machine stator 216 of FIG. 6 is radially outboard of and circumscribes the machine rotor 214. With this arrangement, the electric machine 208 is configured as a radial flux electric machine. The electric machine 208 of the present disclosure, however, is not limited to such an exemplary rotor-stator configuration nor to radial flux arrangements. The machine rotor 214, for example, may alternatively be radially outboard of and circumscribe the machine stator 216. In another example, the machine rotor 214 may be axially next to the machine stator 216 configuring the electric machine 208 as an axial flux electric machine. Referring again to FIG. 6, the machine rotor 214 and the machine stator 216 are at least partially or completely housed within an interior of the machine housing 218.

The electric machine 208 of FIG. 6 may be configurable as an electric motor and/or an electric generator; e.g., an electric motor-generator. For example, during a motor mode of operation, the electric machine 208 may operate as the electric motor to convert electricity received from the aircraft electrical system 210. The machine stator 216, for example, may generate an electromagnetic field with the machine rotor 214 using a current of electricity received from the aircraft electrical system 210 through the EM controller 212. This electromagnetic field may drive rotation of the machine rotor 214. The machine rotor 214, in turn, may provide mechanical power to and drive rotation of the respective engine rotating structure 70, 74 (see FIG. 2) and/or other elements through the power coupler 104 (see FIG. 2). This mechanical power may be provided to boost power or completely power the rotation of the respective engine rotating structure 70, 74 (see FIG. 2) and/or other elements. By contrast, during a generator mode of operation, the electric machine 208 may operate as the electric generator to convert mechanical power received from the respective engine rotating structure 70, 74 (see FIG. 2) and/or other elements into electricity. Rotation of the machine rotor 214, for example, may be rotationally driven by rotation of the respective engine rotating structure 70, 74 (see FIG. 2) and/or other elements through the power coupler 104 (see FIG. 2). The rotation of the machine rotor 214 may generate an electromagnetic field with the machine stator 216, and the machine stator 216 may convert energy from the electromagnetic field into electricity. The electric machine 208 may then provide a current of electricity to the aircraft electrical system 210 through the EM controller 212 for storage and/or further use. The electric machine 208 of the present disclosure, however, is not limited to such exemplary operation. For example, the electric machine 208 may alternatively be configured as a dedicated electric generator; e.g., without the electric motor functionality. In another example, the electric machine 208 may be configured as a dedicated electric motor; e.g., without the electric generator functionality.

The EM controller 212 is electrically coupled to the electric machine 208 through one or more electric cables 222; e.g., high voltage electric cables, power feeder cables, etc. More particularly, controller circuitry in the EM controller 212 is electrically coupled to the electric machine 208 and its machine stator 216 through the electric cables 222. Similarly, the EM controller 212 is electrically coupled to an electrical distribution bus 224 of the aircraft electrical system 210 through one or more electric cables 226; e.g., high voltage electric cables, power feeder cables, etc. More particularly, the controller circuitry in the EM controller 212 is electrically coupled to the aircraft electrical system 210 and its electrical distribution bus 224 through the respective electric cables 226.

The EM controller 212 and its controller circuitry are configured to control operation of the electric machine 208. For example, when operating as the electric motor, the EM controller 212 is configured to regulate a flow of electricity from the aircraft electrical system 210 to the electric machine 208. This electricity flow regulation may include: (a) turning-on the flow of electricity from the aircraft electrical system 210 to the electric machine 208 (e.g., electrically coupling the electric machine 208 to the aircraft electrical system 210); (b) turning-off the flow of electricity from the aircraft electrical system 210 to the electric machine 208 (e.g., electrically decoupling the electric machine 208 from the aircraft electrical system 210); (c) moderating the flow of electricity from the aircraft electrical system 210 to the electric machine 208. Here, the EM controller 212 operates as a motor controller. In another example, when operating as the electric generator, the EM controller 212 is configured to regulate a flow of electricity from the electric machine 208 to the aircraft electrical system 210. This electricity flow regulation may include: (a) turning-on the flow of electricity from the electric machine 208 to the aircraft electrical system 210 (e.g., electrically coupling the electric machine 208 to the aircraft electrical system 210); (b) turning-off the flow of electricity from the electric machine 208 to the aircraft electrical system 210 (e.g., electrically decoupling the electric machine 208 from the aircraft electrical system 210); (c) moderating the flow of electricity from the electric machine 208 to the aircraft electrical system 210. Here, the EM controller 212 operates as a generator controller.

The aircraft electrical system 210 includes the electrical distribution bus 224. This aircraft electrical system 210 may also include a power source 228 and/or a power storage 230. The electrical distribution bus 224 is electrically coupled to the electric machine 208 through the EM controller 212. The electrical distribution bus 224 is also electrically coupled to the power source 228 and the power storage 230, respectively via electric cables 232 and 234; e.g., high voltage electric cables, power feeder cables, etc. With this arrangement, the electrical distribution bus 224 provides an intermediate connection between the various electrical aircraft propulsion system members 208 (via 212), 228 and 230. The power source 228 may be an electric generator powered by the turbine engine 24 (see FIG. 1) or an electric generator powered by another aircraft powerplant; e.g., an engine of a companion aircraft propulsion system, an engine of an auxiliary power unit (APU), a fuel cell system, etc. The power storage 230 is configured to receive electricity from the electrical distribution bus 224 for storage. The power storage 230 is also configured to provide the stored electricity to the electrical distribution bus 224. The power storage 230, for example, may be configured as or otherwise include one or more electricity storage devices; e.g., batteries, super capacitors, etc.

Referring to FIG. 2, it is also contemplated one of the first engine accessories 106 (e.g., 106A) may be configured as a dedicated electric machine (e.g., an electric motor-generator, an electric motor or an electric generator) associated with the first engine rotating structure 70. In addition or alternatively, it is contemplated the second engine accessory 108 may be configured as a dedicated electric machine (e.g., an electric motor-generator, an electric motor or an electric generator) associated with the second engine rotating structure 74.

In some embodiments, referring to FIG. 1, the accessory gearbox 102 may be arranged in the inner housing compartment 84. The accessory gearbox 102, for example, may be mounted to the inner case 80. The present disclosure, however, is not limited to such an exemplary accessory gearbox location or mounting arrangement. For example, it is contemplated the accessory gearbox 102 may alternatively be arranged in the outer housing compartment 90 or another location.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
a first engine rotating structure (70, 148) comprising a first bladed rotor;
a second engine rotating structure (74, 160) comprising a second bladed rotor, the second engine rotating structure (74, 160) rotationally independent of the first engine rotating structure (70, 148);
a gearbox (102) including a gearbox housing (116), a first gear system (146) and a second gear system (158), the gearbox housing (116) including a first compartment (137A) and a second compartment (137B) fluidly decoupled from the first compartment (137A), the first gear system (146) disposed in the first compartment (137A) and operationally coupled to the first engine rotating structure (70, 148), and the second gear system (158) disposed in the second compartment (137B) and operationally coupled to the second engine rotating structure (74, 160);
a first lubrication system (190) configured to lubricate the first gear system (146) and fluidly coupled to the first compartment (137A); and
a second lubrication system (192) configured to lubricate the second gear system (158) and fluidly coupled to the second compartment (137B), the second lubrication system (192) fluidly decoupled from the first lubrication system (190).

2. The assembly of claim 1, further comprising a turbine engine (24) including the first engine rotating structure (70, 148) and the second engine rotating structure (74, 160), the first lubrication system (190) further configured to lubricate one or more internal components (194) of the turbine engine (24).

3. The assembly of claim 1 or 2, wherein the second lubrication system (192) comprises an electric pump (206) configured to pump lubricant to the second gear system (158).

4. The assembly of claim 1 or 2, wherein the second lubrication system (192) comprises a mechanical pump (206) configured to pump lubricant to the second gear system (158), and the mechanical pump (206) is operationally coupled to the second engine rotating structure (74, 160) through the second gear system (158).

5. The assembly of any preceding claim, further comprising an engine accessory (110) operationally coupled to the second engine rotating structure (74, 160) through the second gear system (158), the second lubrication system (192) further configured to lubricate the engine accessory (110), or
further comprising an engine accessory (110) mounted to the gearbox (102), the engine accessory (110) operatively coupled to the second engine rotating structure (74, 160) through the second gear system (158).

6. The assembly of claim 5, wherein
the engine accessory (110) comprises an electric machine (208); and
the electric machine (208) is configurable as at least one of an electric motor or an electric generator.

7. The assembly of claim 5 or 6, further comprising:
a second engine accessory (108) operationally coupled to the second engine rotating structure (74, 160) through the second gear system (158);
the second lubrication system (192) further configured to lubricate the second engine accessory (108).

8. The assembly of any preceding claim, wherein
the gearbox (102) further includes a power transfer apparatus (136) and a power coupler (104);
the power coupler (104) is configurable in a first arrangement and a second arrangement;
the power coupler (104) operatively couples the first gear system (146) to the power transfer apparatus (136) and operatively decouples the second gear system (158) from the power transfer apparatus (136) in the first arrangement; and
the power coupler (104) operatively couples the second gear system (158) to the power transfer apparatus (136) and operatively decouples the first gear system (146) from the power transfer apparatus (136) in the second arrangement.

9. The assembly of claim 8, wherein the power coupler (104) is disposed within the second compartment (137B), and/or wherein the power coupler (104) is arranged with the power transfer apparatus (136) and is disposed between the first gear system (146) and the second gear system (158) within the gearbox housing (116).

10. The assembly of claim 8 or 9, wherein the second lubrication system (192) is further configured to lubricate the power coupler (104).

11. The assembly of claim 8, 9 or 10, wherein the power coupler (104) comprises a clutch (178) to facilitate a transition between the first arrangement and the second arrangement.

12. The assembly of any preceding claim, further comprising an engine case housing the first engine rotating structure (70, 148) and the second engine rotating structure (74, 160), the gearbox (102) disposed outboard of the engine case.

13. The assembly of any preceding claim, further comprising:
a compressor section (43);
a combustor section (44) comprising a combustor (98);
a turbine section (45); and
a flowpath (50) extending through the compressor section (43), the combustor section (44) and the turbine section (45), wherein the first bladed rotor is disposed between the combustor (98) and the second bladed rotor along the flowpath (50).

14. The assembly of any preceding claim, further comprising an electric machine (208) mounted to the gearbox (102), the electric machine (208) operatively coupled to the first engine rotating structure (70, 148) through the first gear system (146).

15. The assembly of any preceding claim, further comprising a plurality of engine accessories (106) mounted to the gearbox (102), each of the plurality of engine accessories (106) operatively coupled to the first engine rotating structure (70, 148) through the first gear system (146).
